# EUROPEAN PATENT APPLICATION

(11) **EP 4 307 609 A1**
(43) Date of publication of application: **17.01.2024**
(21) Application number: 22184937.5
(22) Date of filing: 14.07.2022
(51) Int. Cl.: H04L 9/40, G06F 21/55

(54) **SYSTEM AND METHOD FOR DECENTRALIZED INTRUSION DETECTION SYSTEM**

(71) Applicant: Argus Cyber Security Ltd, 6789155 Tel Aviv (IL)
(72) Inventor: Zlatokrilov, Haim, 90411 Nürnberg (DE)
(74) Representative: Continental Corporation

(57) **Abstract**

A system and method for of detecting an intrusion into an in-vehicle network includes collecting, by one or more agents in a respective one or more electronic control devices (ECUs) (250) data relevant to intrusion detection; sending the data, by the one or more agents, to an intrusion detection system (IDS); and identifying the intrusion, by the IDS, based on the data.

## Description

### FIELD OF THE INVENTION

The present invention relates generally to a decentralized intrusion detection system (IDS).

### BACKGROUND OF THE INVENTION

Deploying current intrusion detection systems (IDS) requires integration of the IDS with many components of a vehicle, e.g., integration with different electronic control (ECU) units, switches and the like. In order to deploy IDS services, many current systems include, in each ECU, an IDS component, unit or module. Other known systems and methods include hard coding or wiring of an IDS unit with some or even all ECUs in a vehicle or system.

Accordingly, deploying a new IDS or updating an existing IDS is costly in many aspects, e.g., time, effort and money. In addition, each new component added to a vehicle, e.g., connected to an in-vehicle network, needs to be adapted to work with the IDS in the vehicle.

Moreover, current or known IDS cannot automatically discover components on an in-vehicle network nor can they dynamically and automatically provide IDS services to (possibly newly connected) components in a vehicle. Yet another drawback of current or known IDS is their inability to host services, e.g., as done by service-oriented architecture (SOA) systems.

### BRIEF DESCRIPTION OF THE DRAWINGS

Non-limiting examples of embodiments of the disclosure are described below with reference to figures attached hereto that are listed following this paragraph. Identical features that appear in more than one figure are generally labeled with a same label in all the figures in which they appear. A label labeling an icon representing a given feature of an embodiment of the disclosure in a figure may be used to reference the given feature. Dimensions of features shown in the figures are chosen for convenience and clarity of presentation and are not necessarily shown to scale. For example, the dimensions of some of the elements may be exaggerated relative to other elements for clarity, or several physical components may be included in one functional block or element. Further, where considered appropriate, reference numerals may be repeated among the figures to indicate corresponding or analogous elements.

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanied drawings. Embodiments of the invention are illustrated by way of example and not limitation in the figures of the accompanying drawings, in which like reference numerals indicate corresponding, analogous or similar elements, and in which:
Fig. 1 shows a block diagram of a computing device according to illustrative embodiments of the present invention; and
Fig. 2 shows a system according to illustrative embodiments of the present invention.

### DETAILED DESCRIPTION

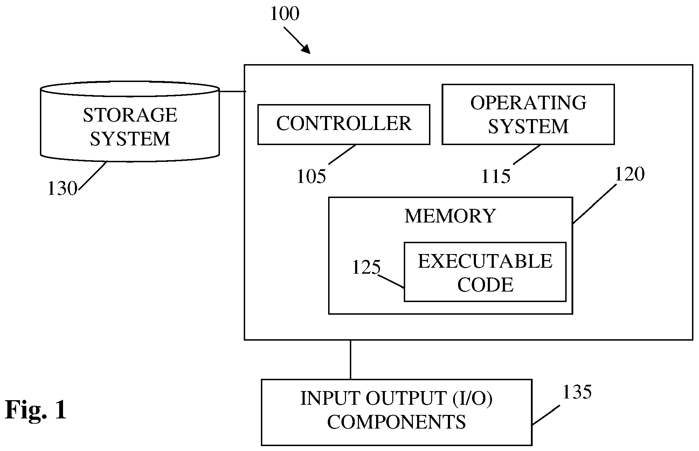

Reference is made to Fig. 1, showing a non-limiting, block diagram of a computing device or system 100 that may be used by, or included in, a system according to some embodiments of the present invention. For example, computing device may be an ECU installed in a vehicle, e.g., an ECU 250 or IDS 222 as further described herein. For the sake of clarity and simplicity, the term ECU will be used herein, however, it will be understood that any relevant components or elements may be applicable, e.g., IoT devices, smart sensors and the like.

In some embodiments, computing device (or system) 100 includes a controller 105 that is a hardware controller. For example, computer hardware processor or hardware controller 105 can be, or can include, a central processing unit processor (CPU), a chip or any suitable computing or computational device. In some embodiments, computing system 100 includes a memory 120, an operating system (OS) 115, executable code 125, a storage system 130 and input/output (I/O) components 135. In some embodiments, controller 105 (or one or more controllers or processors, possibly across multiple units or devices) is configured (e.g., by executing software or code) to carry out methods described herein, and/or to execute or act as the various modules, units, etc., for example by executing software or by using dedicated circuitry. More than one computing devices 100 may be included in, and one or more computing devices 100 may be, or act as the components of, a system according to some embodiments of the invention.

In some embodiments, OS 115 includes any code segment (e.g., one similar to executable code 125 described herein) designed and/or configured to perform tasks involving coordination, scheduling, arbitration, supervising, controlling or otherwise managing operation of computing device 100, for example, scheduling execution of software programs or enabling software programs or other modules or units to communicate. For example, OS 115 can be a commercial operating system, e.g., QNX or Linux.

In some embodiments, memory 120 is a hardware memory. For example, memory 120 may be, or may include machine-readable media for storing software e.g., a Random-Access Memory (RAM), a read only memory (ROM), a memory chip, a flash memory (referred to herein as flash), a volatile and/or non-volatile memory or other suitable memory units or storage units. Memory 120 may be or may include a plurality of, possibly different memory units. In some embodiments, memory 120 is a computer or processor non-transitory readable medium, or a computer non-transitory storage medium, e.g., a RAM. Some embodiments may include a non-transitory storage medium having stored thereon instructions which when executed cause the processor to carry out methods disclosed herein.

Executable code 125 can be software, an application, a program, a process, task or script. A program, process, task, application or software as referred to herein may be any type of instructions, e.g., firmware, middleware, microcode, hardware description language etc. that, when executed by one or more hardware processors or controllers 105, cause a processing system or device (e.g., system 100) to perform the various functions described herein.

In some embodiments, executable code 125 is executed by controller 105 possibly under control of operating system 115. For example, executable code 125 may be an application that detects intrusion of a malicious entity into an in-vehicle network. Although, for the sake of clarity, a single item of executable code 125 is shown in Fig. 1, a system according to some embodiments of the invention may include a plurality of executable code segments similar to executable code 125 that may be loaded into memory 120 and cause controller 105 to carry out methods described herein. For example, a first executable code 125 in an ECU may be an application or function that sends raw or other data to a second executable code 125 in an IDS.

Storage system 130 may be or may include, for example, a hard disk drive (e.g., when connected to server 210 as further described), a universal serial bus (USB) device, a flash memory or unit (e.g., in an ECU 250) or any other suitable removable and/or fixed storage unit. In some embodiments, some of the components shown in Fig. 1 may be omitted. For example, in an ECU, storage system 130 may be a non-volatile memory (e.g., a flash memory) included in memory 120 of an ECU. Accordingly, although shown as a separate component, storage system 130 may be embedded or included in system 100, e.g., in memory 120.

I/O components 135 may be, may be used for connecting (e.g., via included ports) or they may include: a mouse; a keyboard; a touch screen or pad or any suitable input device. I/O components may include one or more screens, touchscreens, displays or monitors, speakers and/or any other suitable output devices. Any applicable I/O components may be connected to computing device 100 as shown by I/O components 135, for example, a wired or wireless network interface card (NIC), a universal serial bus (USB) device or an external hard drive may be included in I/O components 135.

A system according to some embodiments of the invention may include components such as, but not limited to, a plurality of central processing units (CPU) or any other suitable multipurpose or specific processors, controllers, microprocessors, microcontrollers, field programmable gate arrays (FPGAs), programmable logic devices (PLDs) or application-specific integrated circuits (ASIC). A system according to some embodiments of the invention may include a plurality of input units, a plurality of output units, a plurality of memory units (e.g., memory 120 in an ECU may include a flash memory and a RAM), and a plurality of storage units. A system may additionally include other suitable hardware components and/or software components. In some embodiments, a system may include or may be, for example, a server computer, a network device and any number of devices, e.g., internet of things (IoT) devices, ECUs in a vehicle, e.g., ECUs included in a car, a train, a boat or an airplane.

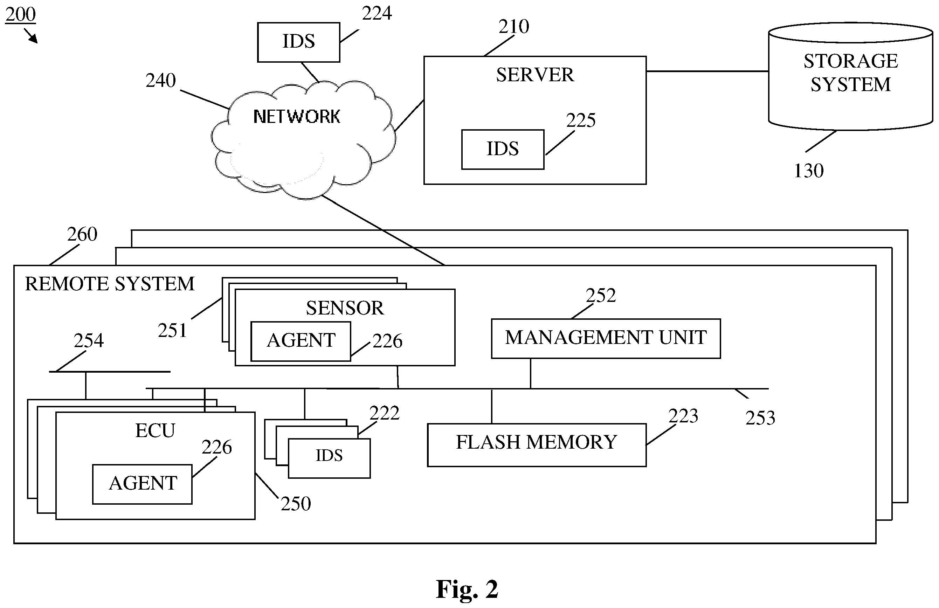

Reference is made to Fig. 2 which shows a system 200 according to illustrative embodiments of the present invention. As shown, in some embodiments, system 200 includes one or more remote systems 260 that can include a plurality of ECUs 250, a plurality of sensors 251 and a management unit 252, one or more IDS 222 units and an in-vehicle networks or buses 253 and 254. As further shown, remote system 260 may include a flash memory 223. As shown, in some embodiments, some (or even all of) ECUs 250 and sensors 251 include an agent 226. For example, in some embodiments, agent 226 is an executable code that, when executed by a controller 105 in an ECU 250 or in a sensor 251, sends data to IDS 222 and/or to IDS 224 or IDS 225. IDS 222, IDS 224 and IDS 225 may all perform similar operations and logic, it will therefore be understood that any operation, method or logic described as performed by one of IDS 222, IDS 224 and IDS 225 can be similarly performed by another one of IDS 222, IDS 224 and IDS 225. Although the discussion herein mainly refers to agents 226 in ECUs 250 it will be understood the agents 226 in sensors 251 are applicable as well. For example, some of sensors 251 can include a lot more than a mere temperature or pressure measuring unit, e.g., a sensor 251 can include a computing device 100 having a memory 120, a controller 105 and executable code 125 and the sensor 251 may store and process measurements, receive network packets and send network packets, messages or frames. Accordingly, the discussion of agents 226 in ECUs 250 is applicable to sensors 251.

Remote system 260 may be any device, system, vehicle or any other applicable entity. For example, remote system 260 or parts or components of remote system 260 may be, or may be included or embedded in, an IoT device or a vehicle, e.g., an aircraft, car train or ship. Although vehicles such as cars are mainly described herein, other vehicles such as ships, trains and aircrafts are similarly applicable, it will be understood that the scope of the invention is not limited by the type, usage or nature of remote system 260.

Remote systems 260, IDS 222 units, ECUs 250 and sensors 251 may be collectively referred to hereinafter as remote systems 260, IDSs 222, ECUs 250 and/or sensors 251 or individually as remote system 260, IDS 222, ECU 250 and/or sensor 251, merely for simplicity purposes. For example, a sensor 251 may be an oil pressure sensor, a temperature sensor and the like, e.g., when an embodiment is, or is included in, a train or car or other vehicle. When an embodiment is included in an airplane, ship or spacecraft, an ECU 250 may be a line-replaceable unit (LRU), a lower line-replaceable unit (LLRU), a line-replaceable component (LRC), or a line-replaceable item (LRI) component. When an embodiment is included in an airplane, ship or spacecraft, a sensor 251 may be a unit that senses or measures, for example, elevation, acceleration, air speed or flow and the like.

In-vehicle networks or buses 253 and 254 may be any suitable network that enables ECUs 250, sensors 251, IDS 222 and management unit 252 to communicate or exchange digital information. In-vehicle network 253 and 254 may be, may include or may comprise any suitable network infrastructure and support any suitable protocol, e.g., in-vehicle network 253 and 254 may be an Ethernet network, a Controller Area Network (CAN) bus or network or a combination thereof and protocols such as, IP, transmission control protocol (TCP) and the like may be used for sending data from agents 226 to IDSs 222. Accordingly, numerous elements of in-vehicle network 253 and 254 are implied but not shown, e.g., switches, routers, gateways etc. It will be recognized that embodiments of the invention are not limited by the nature of in-vehicle network 253 and 254.

In some embodiments, management unit 252 performs or carries out some of the methods or logic described herein. For example, management unit 252 instructs agents 226 to use a first IDS 222 or management unit 252 instructs agents 226 to switch to a backup IDS 222 or management unit 252 instructs agents 226 to start sending data to IDS 224 or 225. In other cases, management unit 252 commands some or even all of ECUs 250 to start or stop sending packets or traffic for inspection to IDS 222 and/or management unit 252 indicates, to a specific one of ECUs 250, which traffic should be sent to which of IDSs 222, 224 or 225 . In yet other embodiments, management unit commands agent 226 or ECU 250 to perform an action, e.g. restart, block specific traffic etc.

Network 240 may be any suitable network that enables server 210 and remote device 260 to communicate or exchange digital information. Network 240 may be, may comprise or may be part of a private or public internet protocol (IP) network, or the internet, or a combination thereof. Additionally, or alternatively, network 240 may be, comprise or be part of a global system for mobile communications (GSM) network. For example, network 240 may include or comprise an IP network such as the internet, a GSM related network and any equipment for bridging or otherwise connecting such networks as known in the art. In addition, network 240 may be, may comprise or be part of an integrated services digital network (ISDN), a public switched telephone network (PSTN), a public or private data network, a local area network (LAN), a metropolitan area network (MAN), a wide area network (WAN), a wireline or wireless network, a local, regional, or global communication network, a satellite communication network, a cellular communication network, any combination of the preceding and/or any other suitable communication means. Accordingly, numerous elements of network 240 are implied but not shown, e.g., access points, base stations, communication satellites, GPS satellites, routers, telephone switches, etc. It will be recognized that embodiments of the invention are not limited by the nature of network 240. Server 210 may be a server as known in the art. As shown, server 210 may be operatively connected (e.g., directly or over a network) to a storage system 130. IDS 224 can be a program executed by a computer connected to network 240, as shown, IDS 225 may be included in, or operatively connected to, server 210.

In some embodiments, one or more agents 226 in a respective one or more ECUs 250 collect data relevant to intrusion detection and send the collected data to IDS 222. In some embodiments, IDS 222 identifies an intrusion or a security threat based on the data received from agents 226. For example, other than raw data collected and sent as further described, an agent 226 can report to IDS 222 which processes are running on ECU 250, inform IDS 222 of data in a RAM of ECU 250 and so on.

For example, in some embodiments, one of IDSs 222, 224, 225 detects in intrusion into in-vehicle network 253 or 254 by receiving from one or more agents (226) connected to in-vehicle network 253 or 254, data relevant to intrusion detection and analyzing or processing the data. For example, data relevant to an intrusion can be all ingress and egress (incoming and outgoing) network packets received and sent by an ECU 250 that includes (or hosts) an agent 226. For example, an agent 226 inside an ECU 250 sends a copy of all incoming and outgoing network packets as sent or received by the hosting ECU 250. By analyzing, e.g., correlating or comparing, data data received from a plurality of agents 226, IDS 222 identifies an intrusion. For example, identifying that a number of ECUs 250 all receive login requests from the same source may cause IDS 222 or 224 that a hacker is attempting to login to ECUs 250.

In some embodiments, agent 226 sends raw data to IDS 222. For example, in some embodiments, agent 226 captures network packets as they are received by ECU 250 and sends the packets, without altering their content, to IDS 222. For example, in some embodiments, agent 226 operates in sniffer or mirror mode, that is, it sniffs, captures, obtains or receives ingress (incoming) network packets from a network interface card or unit in ECU 250, and sends the captured or obtained packets to IDS 222. In some embodiments agent 226 sends all packets sent by ECU 250 to IDS 222. For example, agent 226 may intercept outgoing (egress) packets in ECU 250 and forward these packets to IDS 222. Accordingly, IDS 222 may be aware of any or even all network traffic related to (incoming to, or outgoing from an) ECU 250, namely, both ingress and egress traffic. The ability of a system according to embodiments of the invention to dynamically select the type (and consequently, the amount) of data sent from ECUs 250 to a centralized IDS (e.g., one of IDS 222, IDS 224 and IDS 225) is a great advantage over current or known systems and methods which are preconfigured (and in some cases, hardwired) and therefore cannot dynamically change the active IDS nor can they dynamically select the type or amount of data sent by an ECU to an IDS or which ECU 250 will send data to which IDS. For example, if a security risk is suspected or identified, IDS 224 can instruct agents 226 in all ECUs of remote system 260 to send all ingress/egress data incoming to or outgoing from all ECUs 250 while if no risk is suspected then IDS 224 can instruct agents 226 in sensitive or critical ECUs 250 (e.g., ones controlling the braking system and the engine) to send all ingress/egress data while instructing other ECUs 250 (e.g., ones controlling the infotainment system or climate control) to only send alerts or only send to IDS 224 data from specific sources etc. Accordingly, embodiments of the invention enable various operational modes ranging from, for example, highly verbose mode in which all ingress/egress data from possibly all ECUs 250 is sent to an IDS, to a selective mode in which some ECUs 250 operate in verbose mode while other ECUs 250 send data to an IDS according to a rule or criteria. Since the amount of traffic (bandwidth) over an in-vehicle network is in issue to be taken into account, the ability of embodiments of the invention to increase or reduce the amount of traffic (generated by sending data from ECUs 250 to IDS 222 or another IDS) is a great advantage over current or known systems and methods.

For example, in some embodiments, having identified a suspicious (high) amount or number of messages from a climate control unit or from the braking system in a vehicle (a remote system 260), IDS 222 or 224 instructs the ECUs 250 which control the climate control unit and the braking system to assume verbose mode (that is, send all ingress/egress data to/from these ECUs to IDS 222) and IDS 222 or 224 further instructs some or even all of the other ECUs in the vehicle to only send data originating from, or sent to, the ECUs 250 which control the climate control unit and the braking system. Such flexibility enables systems and methods of the invention to efficiently and quickly identify threats by dynamically and automatically clearing, freeing or availing in-vehicle networks 253 and/or 254 for important traffic.

In some embodiments, in it's minimalistic form, an agent 226 is a small and simple task or process, executed on a controller 105 in an ECU 250 that merely reads (incoming or outgoing) packets from a physical port or of a first network protocol or network layer and sends the packets to IDS 222. Accordingly, in some embodiments, IDS 222 receives raw data as if it was connected to a (remote) physical port, or connected to a remoter network protocol port or layer. As described, in order to deploy IDS services, many current systems include, in each ECU, an IDS component, unit or module. Other known systems include hard coding or wiring of an IDS unit with ECUs. By deploying an agent 226 in ECUs as described, embodiments of the invention overcome the problems met by current or known systems, that is, rather then including an IDS in each ECU, which is costly to start with, as well as costly to maintain (e.g., when IDS updates are needed), or hardcoding or hardwiring ECUs with IDSs, a small and simple agent 226 is included in ECUs 250 and a single IDS (222, 224 or 225) then needs to be maintained.

An agent 226 can capture (incoming or outgoing) raw data, e.g., network packets, frames or messages and send the network packets, frames or messages as captured or received, to IDS 222. In some embodiments, an agent 226 first packages or encapsulates the captured data and sends the packaged or encapsulated data to IDS 222. An agent 226 can capture raw data from any network protocol and/or from any physical interface and can send data to IDS 222 over any (either same or different) network protocol and/or physical interface, physical network or bus.

For example, in some embodiments, one or more agents 226 capture raw data from a CAN bus, encapsulate or otherwise package the captured data, and send the packaged data, over the same CAN bus, to IDS 222. In another embodiment, some of ECUs (and thus agents 226) are connected to more than one physical networks or buses, e.g., an ECU 250 is connected to network 253 and to network 254. In such case, the ECU can capture raw or other data from a first network (e.g., from network 253) and send the captured data to IDS 222 over a second, different network, e.g., over network 254. For example, in one embodiment, an agent 226 can capture raw data from a first CAN bus (e.g., when network 253 is a CAN bus) and send captured data, to IDS 222, over a second CAN bus (e.g., when network 254 is a CAN bus), and, in a second case or embodiment, an agent 226 can capture raw data from an Ethernet network (e.g., when network 253 is an Ethernet physical network) and send captured data, to IDS 222, over CAN bus, e.g., over network 254 when network 254 is a CAN bus, similarly, an agent 226 can capture data from a first Ethernet network and send it to IDS 222 over a second Ethernet infrastructure. In a similar way, an agent 226 can capture data sent over a first network protocol or layer (e.g., a TCP or Flexray) and send the captured data, to IDS 222, over a second, different protocol or network layer (e.g., a user datagram protocol (UDP). Accordingly, embodiments of the invention enable an IDS 222 to receive raw data from any physical network and/or any network protocol in system 260 as if IDS 222 was itself connected to the physical network and/or communicating over the network protocol.

In some embodiments, agents 226 are configured to automatically collect data, and automatically send the collected data to at least one of IDSs 222, 224, 225. Data sent by agents 226 as described is used by at least one of IDSs 222, 224, 225, to detect an intrusion into in-vehicle network 253. For example, an agent 226 may be included in (hosted by) an ECU 250 at production time and executable code 125 in the agent 226 may be a simple code designed to intercept all incoming and outgoing traffic and send the intercepted data to a predefined address. For example, executable code 125 in agents 226 may cause a controller or processor in an ECU 250 to send all data intercepted or captured by an agent 226 to a predefined port in a predefined internet protocol (IP) address. The predefined IP address may be assigned to IDS 222, e.g., by management unit 252, and IDS 222 is configured (through executable code 125 therein) to listen to the predefined port. Accordingly, without any need to configure components, a system according to some embodiments automatically provides an IDS with all data received and sent by all ECUs in the system.

In some embodiments, an ECU 250 (or other component) which is newly connected to in-vehicle network 253 or 254 is automatically discovered, e.g., by IDS 222 and an agent 226 in the newly discovered ECU 250 is caused to send data to IDS 222. For example, in some embodiments, agent 226 periodically broadcasts a beacon message, e.g., over a specific user datagram protocol (UDP) port (which IDS 222 listens to) or over a CAN bus (sniffed by IDS 222) thus enabling IDS 222 to automatically and dynamically identify ECUs connected to network 253 or 254. For example, a newly connected ECU or component may be an ECU 250 which was shutdown and then rebooted or it may be a dongle or other component connected to network 253 or 254, e.g., in a service facility or by a user (e.g., a driver when remote system 260 is a vehicle). Accordingly, in some embodiments, IDS 222 is constantly and dynamically aware of ECUs or other components connected to in-vehicle network 253 and 254 and automatically and dynamically causes components on the network to send data to IDS 222.

Accordingly, embodiments of the invention enable easy and simple scalability, that is, a system including an IDS 222 that supports, or provides IDS services to twenty ECUs 250 can be scaled up to include and support thirty ECUs 250 by merely adding, or connecting to network 253, additional ECUs 250 that include agents 226. As described, newly added ECUs 250 can be automatically discovered by IDS 222, e.g., using a beacon message, that is, a message broadcasted over in-vehicle networks 253 or 254 informing agents 226 how to reach (or send data to) IDS 222, accordingly, scaling up a system (adding ECUs 250) is an automatic and simple process merely requiring a user to connect or add ECUs to remote system 260. In another aspect, fleet-wise scalability is achieved by some embodiments by merely configuring agents 226, in vehicles 260 added to the fleet, to communicate with IDS 224.

In some embodiments, one or more of agents 226 receives, from one of IDSs 222, 224 or 225, a command, and the receiving agent 226 collects and sends data, according to the command. For example, in order to identify who is sending suspicious network packets, IDS 222 commands a set of agents 226 to send only received packets and IDS 222 looks at the source of all packets to thus identify that many of the agents (that is, the hosting ECUs 250) receive suspicious packets from the same source. In another case, to concentrate on a specific ECU 250 suspected of being compromised, IDS 222 may command all other agents 226 in all other (than the suspicious ECUs) to be silent (refrain from sending any data). The ability to control the type, amount, verbosity or any other aspect of data sent by agents 226 enables embodiments of the invention to quickly and efficiently pinpoint an infected ECU 250 or otherwise identify an intrusion into in-vehicle networks 253 and 254. As further described, one of IDSs 222, 224 or 225 can provide one or more agents 226 with a rule for collecting and sending data. For example, IDS 222 can command an agent 226 to only send packets larger than 200 bytes, only send packets that include a specific text string or send to IDS 222 only packets received from a specific source and so on.

In some embodiments, an agent 226 in ECU 250 requests a service from IDS 222 and, in response, IDS 222 provides the service to ECU 250. Accordingly, different intrusion detection services can be provided by IDS 222 to different ECUs, or different services can be provided by IDS 222 to an ECU during different time intervals, or when the ECU is in different states. For example, in order to reduce load, an agent 226 can request IDS 222 (or IDS 222 can decide) to only inspect IP packets, only inspect packets from a specific source, ignore packets from a specific source and so on.

In some embodiments, IDS 222 (or management unit 252) controls operation of agents 226. For example, in some embodiments, IDS 222 (or IDS 224 or 225, or management unit 252) instructs an agent 226 to start capturing and sending data to a specific IDS 222, stop capturing and/or sending data, start capturing and sending all received data, or start capturing and sending data received from a specific physical network, specific protocol port, or specific source node on one of networks 253 and 254. As described, an IDS 222 can command an ECU 250 or agent 226 to perform various actions, e.g., restart, block specific traffic etc.

In some embodiments, IDS 222 (or management unit 252) provides agent 226 with one or more rules or criteria for selecting data to be sent to IDS 222. In some embodiments, IDS 222 instructs, commands or configures agent 226 such that specific information of interest is sent by agent 226 to IDS 222. For example, in some embodiments, IDS 222 instructs a first agent 226 in a first ECU 250 to only send data upon reboot of the ECU 250, e.g., in the case ECU 250 is not critical to operation of remote system 260 (e.g., when the first ECU 250 controls the climate control system) and, in the same embodiment, IDS 222 instructs a second, different agent 226 in a second, different ECU 250 to send all data received from and/or sent by the second ECU 250 (e.g., when the second ECU 250 is a critical ECU, e.g., one controlling the engine or braking system). In yet another example, IDS instructs agent 226 to only send IP packets from specific source IP and/or port, e.g., if it is suspected that a specific ECU (the one with the specific source IP) is compromised. Accordingly, data sent from agents 226 to IDS 222 can be dynamically controlled or changed. For example, in order to reduce bandwidth, agents in non-critical ECUs may send less data to IDS 222 while agents in critical ECUs may send more data to IDS 222.

In some embodiments, IDS 222 identifies an intrusion or cyber threat based on correlating data from at least two ECUs 250. For example, through correlation or comparison of data in packets and/or correlation or comparison of times packets are received, IDS 222 identifies that two or more ECUs 250 are receiving (exceptionally or too) many packets from a specific source (e.g., from a specific source IP address) IDS 222 may determine that the ECU 250 with the specific source IP is compromised, e.g., a malicious entity managed to gain control of the ECU 250 and is flooding network 253 with messages. In another example, if two or more ECUs 250 fail to communicate with a specific ECU 250, e.g., they receive error messages when trying to communicate with the ECU 250 then, provided with the error messages from the two or more ECUs 250, IDS 222 can determine that there's a problem with the specific ECU 250, that is, either there's a malfunction in the specific ECU 250 or it is compromised.

In some embodiments, ECUs 250 and network 253 and 254 are included in (are internal to) a vehicle 260 and, instead of, or in addition to, communicating with internal IDS 222, agents 226 communicate with external (to vehicle) IDS 224 or with external (to vehicle) IDS 225 in server 210. Any communication of agents 226 with IDS 222 may be performed with IDS 224 or IDS 225, e.g., raw data may be sent to from agents 226 to IDS 224, events may be reported, by agents 226 to IDS 225, rules for selecting which data to send as described may be set by IDS 225 and so on. For example, in testing mode, agents 226 send data to IDS 225 so that an operator of server 210 can review data. In another case, a cloud IDS 224 can provide intrusion detection service to a fleet of vehicles 260. In yet another case, if an agent fails to communicate with internal IDS 222 then the agent may attempt to communicate with IDS 224 that may act as a backup IDS.

In some embodiments, agents 226 report selected events to the IDS 222 (or IDSs 224/225). For example, specific events occurring in the ECU, e.g., a reboot, entering diagnostic mode may be reported. For example, an unexpected reboot of an ECU 250 reported to IDS 222 can cause IDS 222 to determine the ECU 250 has been hacked. Rules or criteria for selecting events that are reported to IDS 222 can be predefined (e.g., part of the logic of an agent 226) or they can be dynamically set by one of IDSs 222, 224 and 225. For example, upon determining that a specific ECU 250 has been hacked, IDS 222 may instruct, e.g., by downloading or updating a rule to/in all other agents 226 in vehicle 260, to send all network packets or messages received from the hacked ECU 250, thus gain further insight with respect to the compromised ECU 250.

In some embodiments, IDS 222 stores data received from agents 226 (e.g., on flash memory 223) and IDS 222 uploads at least some of the data to a backend server on the cloud, e.g., to server 210. Server 210 may process data from a plurality of vehicles 260 and identify current or historical attacks or intrusions based on the processing. In some embodiments, agents 226 encrypt and/or encapsulate data before sending the data to IDS 222 thus increasing security of a system. Accordingly, data sent, by agents 226 and over networks 253 and 254 cannot by intercepted by a hostile entity that may have gained access to networks 253 and 254.

In some embodiments, IDS 222 (or 225/224) causes an agent 226 to perform an intrusion prevention or mitigation action. For example, upon detecting an intrusion, security threat or exploitation of an ECU, IDS 222 may instruct agent 226 to reboot the ECU 250 hosting agent 226, or IDS 222 may instruct agent 226 to terminate (kill) a process executed on a controller 105 in the hosting ECU, or IDS 222 may instruct agent 226 to block a (physical or network protocol) port etc. In some embodiments, agents 226 add metadata to the data sent to IDS 222, for example, agent 226 adds metadata identifying the ECU hosting the agent, e.g., a unique ID of the ECU, a MAC address and the like. Any other metadata may be added to data sent to IDS 222, e.g., a model number of the hosting ECU, a software version number and the like may be added, e.g., into each packet, frame or message sent from agent 226 to IDS 222.

In some embodiments or configurations, IDS 222 can obtain data without the help of agents 226. For example, CAN network is a shared bus where all connected components "see" all packets and a specific component typically, based on a destination address in packets, select to process only packets destined at the specific component, and discard packets destined at other components. Accordingly, a in system where a shared bus is used IDS 222 can obtain all packets sent and received by all ECUs 250 by sniffing the bus, that is, by processing all packets on the bus.

In some embodiments, an agent 226 sends data to a first IDS 222 during a first time interval and then selects, or is configured or caused, to send data to a second, different IDS 222 during a second time interval. For example, as shown, vehicle 260 may include more than one IDS 222, e.g., an active IDS 222 an a standby or backup IDS 222, if the active IDS 222 is attacked or has a problem or failure then agents 226 may start sending data to the backup IDS 222. For example, if an active IDS 222 does not respond to ping messages more than two minutes then agents 226 may start sending data a backup IDS 222 and/or to IDS 225 or to IDS 224. In other cases, a backup IDS 222 may become active while the (previously) active IDS 222 is being updated. In some embodiments IDPS 222 is a service installed in a high performance computing (HPC) system, e.g., IDS 222 may be a virtual machine (VM) or a service or application executed by a VM in a SOA or other environment. For example, an onboard computer (not shown) may be connected to in-vehicle network 253 and IDS 222 may be executed on a VM running in or on the onboard computer. In some embodiments, more than one IDS 222 may be executed in remote system 260. For example, using VMs as described, an additional VM may be executed on an onboard computer or an additional IDS 222 may be executed on an already active VM. As described, when an IDS 222 is added to a remote system which already has an active (existing) IDS 222, the load between the existing IDS 222 and the newly added IDS 222 can be shared, for example, the existing IDS 222 instructs some of ECUs 250 to stop sending data to the existing IDS 222 and start sending data to the newly added IDS 222 as well as obey commands received from the newly added IDS 222. Accordingly, embodiments of provide scalability with respect to the capacity of an IDS system.

The disclosure of the application comprises all possible combinations of the embodiments as described and all possible combinations of the claims.

## Claims

**1.** A method of detecting, by an intrusion detection system (IDS) (222, 224, 225), an intrusion into an in-vehicle network, the method comprising:
receiving, by the IDS, from one or more agents (226) connected to the in-vehicle network, data relevant to intrusion detection; and
identifying the intrusion, by the IDS and based on the received data.

**2.** A method of detecting an intrusion into an in-vehicle network, the method comprising:
automatically collecting data, by one or more agents (226) in a respective one or more components connected to the in-vehicle network; and
automatically sending the data, by the one or more agents to an IDS (222, 224, 225), wherein the data is usable, by the IDS, to detect an intrusion into the in-vehicle network.

**3.** The methods of claim 2, further comprising:
receiving, by the one or more agents, a command from the IDS; and
collecting and sending data, by the one or more agents to the IDS, according to the command.

**4.** The methods of claim 1 or 2, wherein the data includes raw data in the form of network packets as received or sent by an ECU hosting and agent.

**5.** The methods of claim 1 or 2, further comprising:
identifying, by the IDS, an ECU newly connected to the network; and
causing an agent (226) in the newly connected ECU to send data to the IDS.

**6.** The methods of claim 1 or 2, further comprising:
receiving, by the IDS and from one of the one or more agents, a request for a service; and
providing the service, by the IDS, to the ECU hosting the one of the one or more agents.

**7.** The methods of claim 1 or 2, further comprising providing, by the IDS and to at least one of the one or more agents, a rule for selecting data to be sent to the IDS.

**8.** The methods of claim 1 or 2, wherein the IDS identifies the intrusion based on correlating data from at least two of the one or more agents.

**9.** The methods of claim 1 or 2, wherein the one or more agents and the network are included in a vehicle and wherein the IDS is external to the vehicle.

**10.** The methods of claim 1 or 2, wherein the data is encrypted and/or encapsulated by at least one of the one or more agents.

**11.** The methods of claim 1 or 2, wherein the IDS causes at least one of the one or more agents to perform at least one intrusion prevention or mitigation action.

**12.** The methods of claim 1 or 2, wherein at least one of the one or more agents adds metadata to the data, the metadata identifying the ECU hosting the at least one of the one or more agents.

**13.** The method of claim 1 comprising the steps of the method of claim 2.

**14.** An intrusion detection system (IDS) configured to perform the steps of the method of claim 1.

**15.** An intrusion detection system (IDS) configured to perform the steps of the methods of claims: 4-9 and 11.

**15.** An agent (226) configured to perform the steps of the method of claim 2.

**16.** An agent (226) configured to perform the steps of the methods of claims: 3, 4, 6, 9, 10, 11 and 12.

**17.** A system comprising the IDS of claim 14 and the agent of claim 15.

**18.** A computer program comprising instructions which, when executed by a computing system, cause a system to carry out the method of claims 1, 5-9 and 11.

**19.** A computer program comprising instructions which, when executed by a computing system, cause a system to carry out the method of claims 2, 3, 6, 9, 10, 11 and 12.
